(19) Europäisches Patentamt
European Patent Office
Office européen des brevets

(11) **EP 2 344 802 B1**

(12) **FASCICULE DE BREVET EUROPEEN**

(45) Date de publication et mention
de la délivrance du brevet:
**31.07.2013 Bulletin 2013/31**

(21) Numéro de dépôt: **09783719.9**

(22) Date de dépôt: **05.10.2009**

(51) Int Cl.:
*F16L 15/00* (2006.01)     *E21B 17/042* (2006.01)

(86) Numéro de dépôt international:
**PCT/EP2009/062870**

(87) Numéro de publication internationale:
**WO 2010/043509 (22.04.2010 Gazette 2010/16)**

(54) **COMPOSANT POUR LE FORAGE ET L'EXPLOITATION DES PUITS D'HYDROCARBURES**

BAUTEIL FÜR DAS BOHREN UND DEN BETRIEB VON KOHLENWASSERSTOFFBOHRLÖCHER

COMPONENT FOR DRILLING AND PRODUCTION OF A HYDROCARBON WELL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.10.2008 FR 0805693**

(43) Date de publication de la demande:
**20.07.2011 Bulletin 2011/29**

(73) Titulaire: **VALLOUREC MANNESMANN OIL & GAS FRANCE**
**59620 Aulnoye-Aymeries (FR)**

(72) Inventeurs:
• **VERGER, Eric**
**F-59144 Gommegnies (FR)**
• **GALLOIS, Yann**
**F-59530 Frasnoy (FR)**

(74) Mandataire: **Marsolais, Richard et al**
**Vallourec & Mannesmann Tubes**
**Département Propriété Industrielle**
**27, avenue du Général Leclerc**
**92100 Boulogne-Billancourt (FR)**

(56) Documents cités:
**JP-A- 58 187 684     JP-A- 59 083 887**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention a pour objet un composant utilisé pour le forage et l'exploitation des puits d'hydrocarbures, et plus précisément l'extrémité d'un tel composant, ladite extrémité étant de type mâle ou femelle et apte à être raccordée à une extrémité correspondante d'un autre composant utilisé également pour le forage et l'exploitation des puits d'hydrocarbures. Le document JP 59-83887 A montre des composants connus.

On entend par composant « utilisé pour le forage et l'exploitation des puits d'hydrocarbures », tout élément de forme sensiblement tubulaire destiné à être assemblé à un autre élément du même type ou non pour constituer in fine soit une garniture apte à forer un puits d'hydrocarbures, soit une colonne montante sous-marine pour la maintenance telle que les « workover riser », soit une colonne de cuvelage ou de production de forte épaisseur intervenant dans l'exploitation du puits. L'invention s'applique notamment aux composants utilisés dans une garniture de forage tels que par exemple les tiges de forage « Drill Pipes », les tiges lourdes « Heavy Weight Drill Pipes », les masses-tiges « Drill Collars » et les parties de connexion des tiges et des tiges lourdes dites les « tool joint ».

De manière connue, chaque composant utilisé dans une garniture de forage comporte généralement une extrémité dotée d'une zone filetée mâle et une extrémité dotée d'une zone filetée femelle destinées chacune à être assemblée par vissage avec l'extrémité correspondante d'un autre composant, l'assemblage définissant une connexion. La garniture ainsi constituée est mise en rotation lors du forage à la surface du puits; de ce fait les composants doivent être vissés entre eux avec un couple important pour pouvoir transmettre un couple de rotation suffisant pour permettre le forage dans le puits sans qu'il y ait de dévissage ou bien de sur-vissage. Le couple de vissage est généralement atteint grâce à la coopération en serrage de surfaces de butée ménagées sur chacun des composants destinés à être vissés.

De manière également connue, de la boue sous pression circule à l'intérieur de la garniture de forage jusqu'au fond du puits de manière à garantir le bon fonctionnement du trépan et de manière à faire remonter à la surface les débris.

Toutefois, dans certaines conditions de forage ou d'utilisation de connexions, du gaz peut se retrouver sous pression. L'étanchéité jusqu'ici garantie par des surfaces de butées n'est alors plus assurée. Aussi, il est nécessaire de garantir un niveau d'étanchéité renforcée et correspondant à des pressions élevées, au niveau de la connexion entre deux composants. Pour ce faire, il est connu, sur d'autres types de connexions telles que les connexions VAM® TOP décrite dans le catalogue n°940 de la demanderesse, de ménager sur l'extrémité mâle de la connexion, au-delà de la zone filetée, une surface d'étanchéité destinée à coopérer en serrage radial avec une surface d'étanchéité ménagée sur l'extrémité femelle de la connexion. Plus précisément, la coopération en serrage entre les deux surfaces s'effectue par le montage en force de la surface d'étanchéité de l'extrémité mâle sous la surface d'étanchéité de l'extrémité femelle, et ce, lors de l'assemblage de la connexion par vissage. Afin de faciliter le montage en force, il est connu par exemple d'employer des surfaces d'étanchéité de forme tronconique sur chacune des extrémités mâle et femelles.

Toutefois, compte tenu de l'évolution des cahiers des charges actuels qui tendent à exiger des étanchéités compatibles avec de très forte pressions, il est nécessaire d'imposer des pressions de contact élevées au niveau des surfaces d'étanchéité, ces pressions de contact étant réalisé par une interférence entre l'élément male et l'élément femelle. On entend par interférence, la différence entre la valeur du diamètre moyen de la portion portant la surface d'étanchéité de l'extrémité mâle avant le montage en force, et la valeur du diamètre moyen de la portion portant la surface d'étanchéité de l'extrémité mâle une fois qu'elle est enserrée dans l'extrémité femelle.

Compte tenu des épaisseurs des composants utilisés dans une garniture de forage qui sont de l'ordre de 12.7 à 63.5 mm (soit 0.5 à 2.5 pouces) selon les spécifications dimensionnelles exigées par la norme API 7, qui est la norme définie pour les composants de forage par l'American Petroleum Institute, se pose alors le problème du grippage lors du montage en force, ledit grippage étant fonction de la valeur de la pression de contact et donc de l'interférence et de l'épaisseur du composant. Le même problème se pose pour des connections pour les « workover riser » high Pressure ou pour les tubes épais de cuvelage ou de production.

Afin de diminuer les risques de grippage, plusieurs solutions ont été envisagées. Une première voie d'amélioration, consistant à réduire l'interférence, a été mise à l'étude. Il est alors apparu qu'elle est incompatible avec les tolérances d'usinage admissibles. En effet, il faudrait limiter les écarts maximum admissibles et les défauts de concentricités du diamètre moyen de la portion portant la surface d'étanchéité mâle tout en préservant l'étanchéité.

Une seconde voie d'amélioration a consisté à diminuer l'interférence tout en étendant la surface d'étanchéité. Toutefois, il apparaît lors des essais, qu'allonger la longueur de contact entre les deux surfaces d'étanchéité augmente l'instabilité dudit contact, et donc peut induire une perte d'étanchéité dans certaines conditions de service.

C'est pourquoi, l'invention a pour objet de palier à la problématique de grippage des surfaces d'étanchéité en diminuant principalement la raideur radiale de la portion portant la surface d'étanchéité mâle sans trop perdre de raideur axiale.

Plus précisément, l'invention a pour objet un composant utilisé pour le forage et l'exploitation des puits d'hydrocarbures, selon la revendication 1.

Selon d'autres caractéristiques, le renfort admet un module d'Young axial supérieur au module d'Young du matériau composant la garniture de forage.

Selon d'autres caractéristiques, le renfort admet un coefficient de friction au niveau de la surface de butée supérieur d'au moins 20% à celui du matériau composant la garniture de forage.

Selon d'autres caractéristiques, la portion terminale comprend un appendice s'étendant après la surface d'étanchéité jusqu'à la surface de butée.

Selon d'autres caractéristiques, la première extrémité du composant comprend seconde surface de butée apte à coopérer en serrage avec une surface de butée correspondante de la seconde extrémité.

D'autres avantages et caractéristiques de l'invention apparaîtront dans la description détaillée ci-après à titre d'exemples nullement limitatifs et dans les dessins annexés, qui pourront donc non seulement servir à mieux faire comprendre l'invention mais aussi contribuer à sa définition le cas échéant.

La figure 1A représente une vue en coupe axiale d'un composant d'une garniture de forage suivant un premier example ne faisant pas partie de l'invention.

La figure 1B représente une vue détaillée du composant suivant le premier exemple.

La figure 2A représente une vue en coupe axiale d'un composant d'une garniture de forage suivant un second example ne faisant pas partie de l'invention.

La figure 2B représente une vue détaillée du composant suivant le second exemple.

La figure 3A représente une vue en coupe axiale d'un composant d'une garniture de forage suivant l'invention.

La figure 3B représente une vue détaillée du composant suivant l'invention.

La figure 4A représente une vue en coupe axiale d'un composant d'une garniture de forage suivant une variante du premier exemple.

La figure 4B représente une vue détaillée du composant suivant une variante du second exemple

La figure 5 présente des résultats comparatifs entre l'art antérieur, le premier exemple et l'invention.

Les références utilisées pour chacune des figures sont identiques.

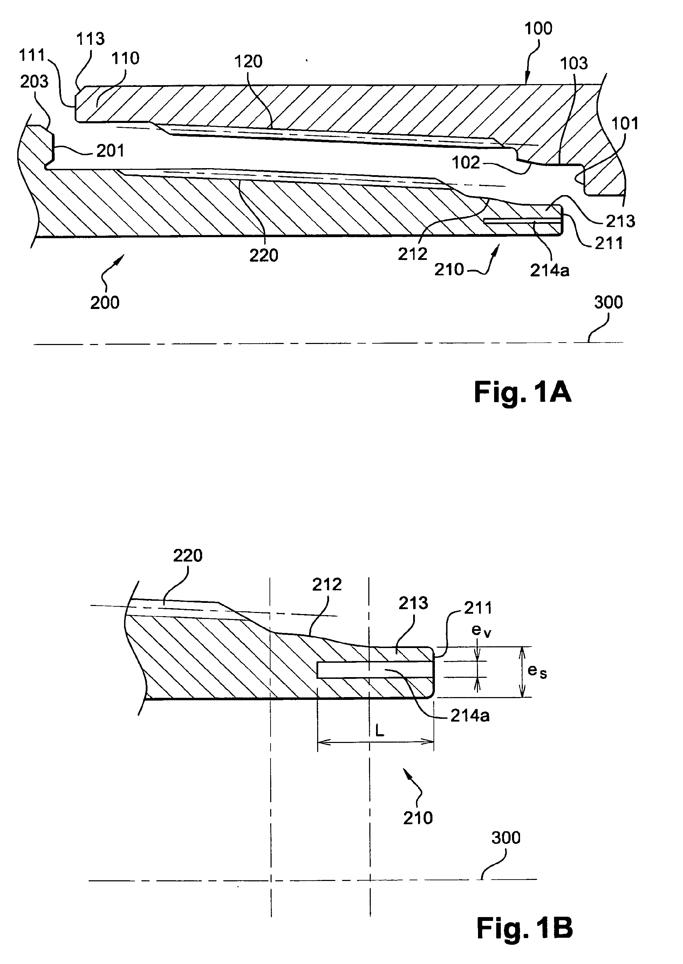

Tel que représenté sur les figures 1A, 2A, 3A, on a représenté une connexion entre les tiges d'une garniture de forage admettant une forme sensiblement tubulaire. La connexion est classiquement composée d'un composant doté d'une extrémité mâle 200 dite « tool-joint » mâle et d'un composant doté d'une extrémité femelle 100 dite « tool-joint » femelle, l'extrémité mâle 200 étant apte à être raccordée à l'extrémité femelle 100. L'extrémité 200 comporte une portion terminale 210 s'achevant par une surface de butée interne 211 apte à coopérer avec une surface de butée 101 correspondante de l'extrémité femelle 100. La portion terminale 210 comporte également une surface d'étanchéité 212 apte à coopérer en serrage avec une surface d'étanchéité 102 correspondante de l'extrémité femelle 100. Les surfaces d'étanchéité 212, 102 sont des surfaces d'étanchéité classiques du domaine technique considéré. Elles peuvent aussi être des surfaces d'étanchéité cône sur cône ou bien tore sur cône ou encore tore et cône sur cône comme décrit dans les demandes WO03/048623 ou WO04109173. L'extrémité 200 comporte également une zone filetée mâle 220 apte à être vissée dans une zone filetée 120 correspondante de l'extrémité femelle 100, qui précède ladite portion terminale 210. Les zones filetées 220, 120 sont des zones filetées classiques du domaine technique considéré.

Conformément à l'invention, on ménage un volume compressible dans l'épaisseur de la portion terminale et en particulier sous la surface d'étanchéité, de manière à diminuer la raideur radiale de ladite portion terminale d'au moins 20%, tout en conservant au moins 60% de la raideur axiale.

De manière avantageuse en termes de réalisation, le volume 214a, respectivement 214b, est un évidement pratiqué dans l'épaisseur de la portion terminale 210, de sorte que ladite portion terminale 210 est plus souple lorsqu'un effort s'applique perpendiculairement à l'axe 300 de l'extrémité mâle.

L'évidement est également conçu de sorte qu'il empiète sur au plus 50% de la surface de butée 211. Ainsi, on préserve la raideur axiale de ladite portion terminale de sorte que la butée joue son rôle lors du vissage des extrémités mâle et femelle.

Selon un premier exemple détaillé aux figures 1A et 1B, l'évidement est une rainure 214a de forme sensiblement annulaire, et symétrique selon l'axe de révolution 300 de l'extrémité mâle 200. La rainure 214a débouche au niveau de la surface de butée interne 211. L'Homme du Métier saura dimensionner la rainure 214a, notamment en termes de longueur L, d'épaisseur $e_v$, et de distance radiale de la rainure par rapport à la surface d'étanchéité 212, de manière à diminuer la raideur radiale de la portion terminale 210 d'au moins 20 %. Il apparaît notamment que la distance de la rainure par rapport à la surface d'étanchéité 212 est aussi un paramètre qui influence la raideur radiale.

De préférence, la longueur L de la rainure 214a est choisie de sorte qu'elle s'étend sous au moins 75% de la surface d'étanchéité 212. De même, la rainure 214a admet une épaisseur $e_v$ comprise entre 10 et 40 % de l'épaisseur minimum $e_s$ de la zone portant la surface d'étanchéité 212.

A titre d'exemple, un modèle établi par éléments finis donne l'équation dite équation de surface reliant la force de contact F au niveau de la zone 212 en fonction de la longueur L et de l'épaisseur $e_v$. Dans cet exemple, la rainure est pratiquée au milieu de l'extrémité de façon à être à égale distance de la périphérie intérieure et extérieure de l'extrémité 210.

$$F = a+be_v+cL+dLe_v+ee_v^2+fL^2+gLe_v^2+he_vL^2+iL^2e_v^2$$

a, b, c, d, e, f, g, h, i, étant des coefficients déterminés par éléments finis et fonctions des caractéristiques dimensionnelles de la garniture de forage.

Ainsi, pour une épaisseur $e_s$ de l'extrémité 210 égale à 12 mm et pour une épaisseur de rainure $e_v$ égale à 4 mm et une longueur L égale à 12.5 mm, on obtient une force F égale à 1603498 Newtons. Sachant que sans rainure 214a, on obtient une force F égale à 2158847 Newtons, on atteint ainsi une diminution de plus de 25%.

De plus, en limitant $e_v$ à 4 mm soit 33% de $e_s$, on minimise la diminution de la raideur axiale dans la mesure où on minimise la diminution de la surface de butée 211.

Bien sûr, pour un composant de géométrie donnée et pour une rainure dont les dimensions sont fixes, il est possible d'augmenter ou de diminuer la raideur radiale respectivement en se rapprochant ou en s'éloignant de la surface d'étanchéité 212, et ce, sans faire varier la raideur axiale.

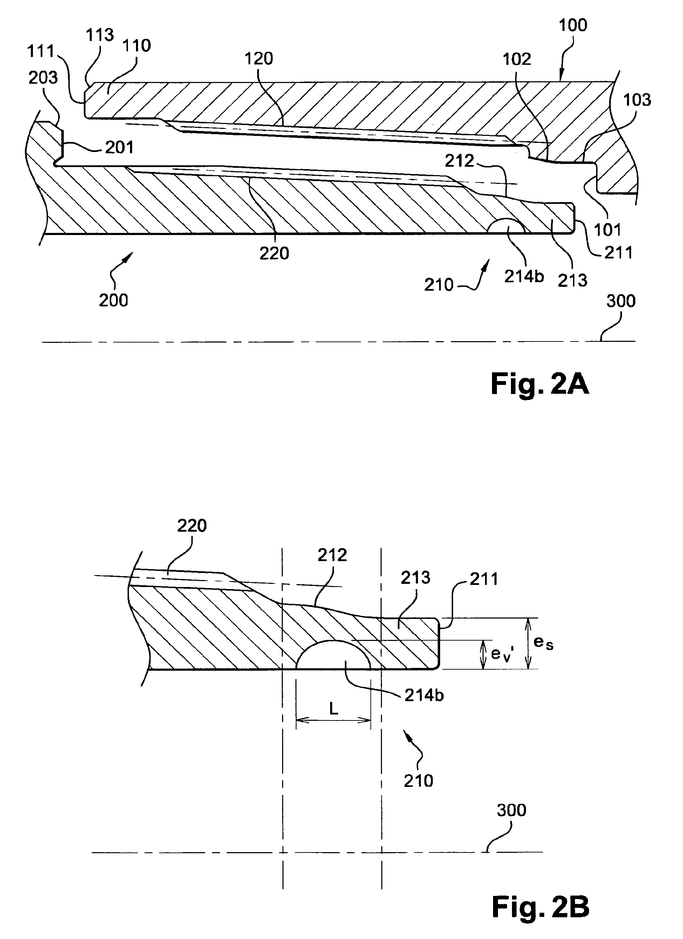

Selon un second exemple décrit et détaillé aux figures 2A et 2B, l'évidement est une rainure 214b de forme sensiblement annulaire, et symétrique selon l'axe de révolution 300 de l'extrémité mâle 200. La rainure 214b débouche à l'intérieur de la portion terminale 210. L'Homme du Métier saura dimensionner la rainure 214b, notamment en termes de longueur L, d'épaisseur $e_{v'}$, de manière à diminuer la raideur radiale de la portion terminale 210 d'au moins 20 %.

Tout comme pour le premier exemple, la longueur L de la rainure 214b est choisie avantageusement de sorte qu'elle s'étend sous au moins 75% de la surface d'étanchéité 212. De même, la rainure 214b admet une épaisseur $e_v$. comprise entre 10 et 40 % de l'épaisseur minimum $e_s$ de la zone portant la surface d'étanchéité 212. Un calcul également basé sur les éléments finis permet d'établir une équation similaire à celle correspondant au mode de réalisation précédent, soit :

$$F = a'+b'e_v+c'L+d'Le_v+e'e_v^2+f'L^2+g'Le_v^2+h'e_vL^2+i'L^2e_v^2$$

a', b', c', d', e', f', g', h', i', étant des coefficients déterminés par éléments finis et fonctions des caractéristiques dimensionnelles de la garniture de forage.

De plus, comme la rainure n'empiète pas sur la surface de butée 211, on maintient en grande partie la raideur axiale.

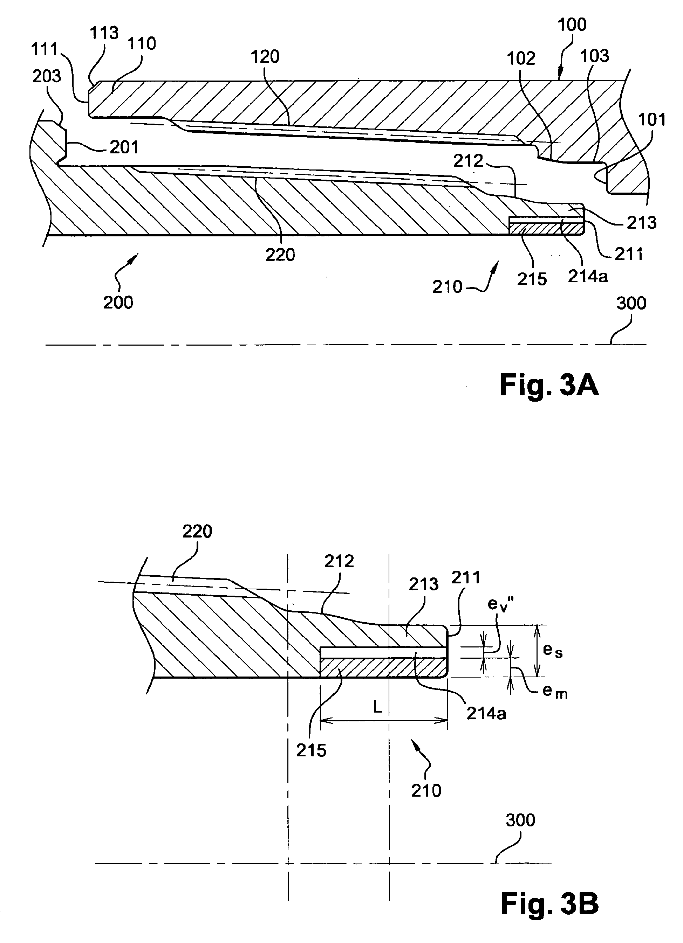

Selon l'invention décrite et détaillée aux figures 3A et 3B, l'évidement annulaire 214a est comblé par un renfort 215, et ce partiellement de sorte que seul un espace d'épaisseur $e_{v''}$ est ménagé entre ledit renfort et la surface intérieure de la portion terminale 210. Du fait de la présence de l'épaisseur $e_{v''}$ de l'espace ménagé entre ledit renfort et la surface intérieure de la portion terminale 210, on obtient une diminution de la raideur de la portion portant la surface d'étanchéité 212, et ce tout comme dans les modes de réalisation décrit précédemment. De plus grâce au renfort 215 qui s'étend jusqu'à la surface de butée interne 211, on augmente la raideur axiale de la portion terminale 210, qui avait été affectée par l'évidement 214.

Le renfort peut être fixé à l'extrémité 200 par tout moyen tel que par exemple le vissage, le sertissage, le collage, le soudage, le brasage.

Avantageusement, le renfort 215 admet un module d'Young supérieur à celui du matériau constituant la connexion. Ainsi, le renfort 215 accroît de façon notable la raideur axiale de la portion terminale 210 portant la surface de butée interne. Ainsi, le couple de serrage appliqué entre la surface de butée 211 et la surface correspondante 101 peut être augmenté. On pourra par exemple utiliser du carbure de tungstène ou des résines chargées en fibres de carbones.

Avantageusement, le renfort 215 admet un coefficient de friction au niveau de la surface de butée 211 supérieur d'au moins 20% à celui du matériau composant la garniture de forage, de sorte qu'il joue un rôle de frein apte à contrer le dévissage des composants de garnitures lors du forage. On pourra par exemple procéder à un traitement de la surface de butée 211 visant à augmenter le coefficient de friction, ou bien effectuer un dépôt métallique du type Cupro-nickel.

L'invention trouve une avantageuse application dans le cas où la portion portant la surface d'étanchéité 212 est prolongée par un appendice 213 s'étendant donc après la surface d'étanchéité 212 jusqu'à la surface de butée interne 211. Ce type d'artifice, notamment utilisé pour éloigner les surfaces d'étanchéité de la surface de butée, présente en effet la caractéristique de diminuer la raideur axiale de l'extrémité 210..

Selon encore d'autres modes de réalisation, le composant de garniture de forage comporte une surface de butée externe 201 apte à coopérer en serrage avec une surface de butée 111 correspondante de l'extrémité femelle 100. Cette surface de butée externe permet notamment d'augmenter le couple de serrage.

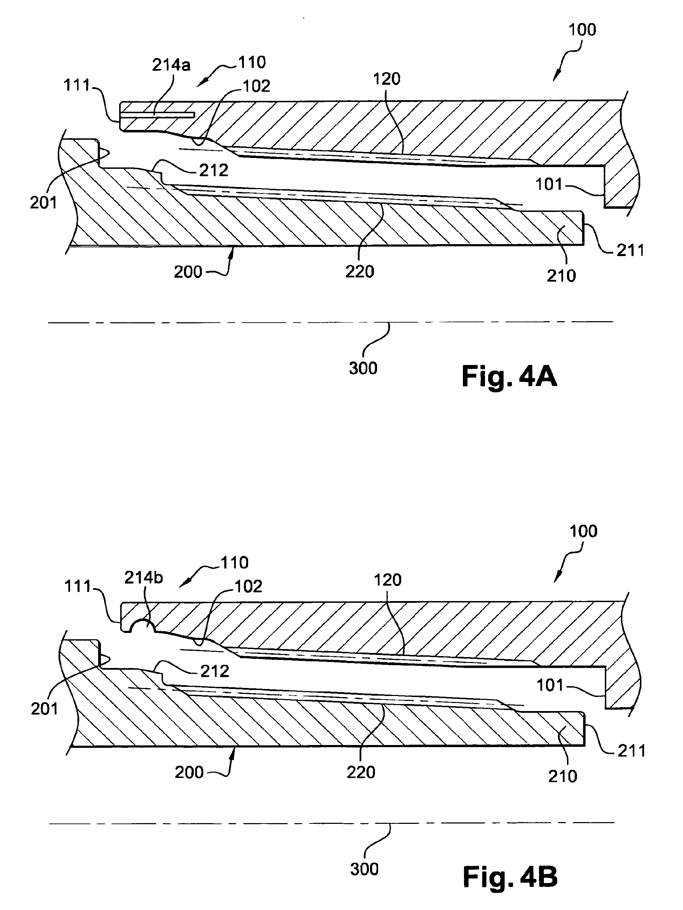

Dans le cas où une portée d'étanchéité serait ménagée entre la butée externe et la zone filetée 120, 220, et tel que décrit dans les figures 4A et 4B, il est bien entendu concevable d'appliquer les principes de l'invention décrite précédemment. Plus précisément, il conviendrait par exemple de ménager dans la portion terminale 110 de l'extrémité femelle 100 une rainure de forme sensiblement annulaire, et symétrique selon l'axe de révolution 300 de l'extrémité femelle 100. La rainure pourra être conforme par exemple à l'un des modes de réalisation décrits précédemment.

En résumé, l'invention peut s'appliquer aussi bien à un composant comportant une surface de butée interne 211 ou bien externe 201, qu'à un composant comportant deux surfaces de butée l'une étant interne et l'autre étant externe. Dans ce dernier cas, il apparaît que la connexion entre les composants raccordés de manière complémentaire peut faire état de deux zones d'étanchéité faisant chacune coopérer en contact serrant deux surfaces d'étanchéité. L'invention permet ainsi de résoudre la problématique de grippage engendrée par les zones d'étanchéité, en diminuant la rigidité radiale selon le cas au niveau des portions terminales (210, 110) tout en conservant la rigidité axiale des surfaces de butée (211, 111).

Les composants sont dimensionnés, dans le cas où il y a une butée interne et une butée externe, de sorte que l'accostage se fasse d'abord au niveau de la butée interne ou bien au niveau de la butée externe.

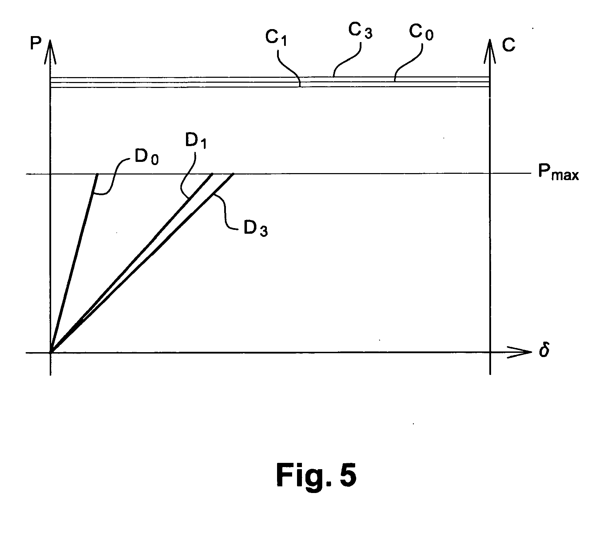

La figure 5, présente en premier lieu un comparatif relatif à l'interférence radiale δ admissible, c'est-à-dire l'interférence maximum qu'il est possible d'obtenir en restant en dessous de la pression de Hertz Pmax à partir de laquelle se produit le grippage, avec D0 correspondant à une connexion de l'art antérieur, D1 correspondant à une connexion conforme au premier exemple et D3 correspondant à une connexion conforme au perfectionnement de l'invention décrit aux figures 3A et 3B. Il apparaît clairement que les modes de réalisation D1 et D3 permettent d'augmenter l'interférence radiale δ considérablement. De ce fait l'étanchéité est optimisée.

La figure 5 montre également que le premier exemple n'affecte pas beaucoup le couple de serrage admissible C par rapport aux résultats de l'art antérieur et que le troisième mode de réalisation permet même de l'augmenter.

Selon d'autres variantes de réalisation de l'invention non représentées sur les figures, le volume compressible ménagé sous la surface d'étanchéité peut être matérialisé par plusieurs rainures 214a ou bien 214b usinées dans la portion terminale d'une extrémité d'un composant utilisé pour le forage et l'exploitation des puits d'hydrocarbures. Le composant peut bien sûr être un composant de garniture apte à forer un puits d'hydrocarbures tel que les parties de connexion des tiges et des tiges lourdes dites les « tool joint ». Il peut aussi être aussi un composant de colonne montante sous-marine pour la maintenance telles que les « workover riser », un composant de colonne de cuvelage ou de production de forte épaisseur intervenant dans l'exploitation du puits.

**Revendications**

1. Composant utilisé pour le forage et l'exploitation des puits d'hydrocarbures, de forme sensiblement tubulaire, doté d'une première extrémité (200 ; 100) apte à être raccordée à une seconde extrémité (100 ; 200) d'un autre composant également utilisé pour le forage et l'exploitation des puits d'hydrocarbures, la première extrémité (200 ; 100) comportant une portion terminale (210 ; 110) dotée d'une première surface de butée (211, 201; 111, 101) apte à coopérer en serrage avec une surface de butée (101, 111 ; 201, 211) correspondante de la seconde extrémité (100 ; 200) et étant dotée d'une surface d'étanchéité (212 ; 102) apte à coopérer en serrage avec une surface d'étanchéité (102 ; 212) correspondante de la seconde extrémité (100 ; 200), ladite portion terminale (210 ; 110) étant précédée d'une zone filetée (220 ; 120) apte à être vissée dans une zone filetée (120 ; 220) correspondante de la seconde extrémité (100 ; 200), un volume compressible (214a) étant ménagé dans l'épaisseur de la première portion terminale (210 ; 110) et en partie sous la surface d'étanchéité (212 ; 102), **caractérisé en ce que** le volume compressible (214a) est ménagé de manière à diminuer la raideur radiale de ladite portion terminale d'au moins 20%, tout en conservant au moins 60% de sa raideur axiale, et **en ce que** le volume compressible (214a) est constitué d'un évidement annulaire débouchant à l'intérieur de la portion terminale (210 ; 110) et au niveau de la première surface de butée (211 ; 111) et comblé partiellement par un renfort (215).

2. Composant selon la revendication 1, **caractérisé en ce que** la longueur (L) de l'évidemment annulaire est choisie de sorte qu'elle s'étend sous au moins 75% de la surface d'étanchéité (212 ; 102).

3. Composant selon la revendication 1 ou 2, **caractérisé en ce que** le renfort (215) admet un module d'Young axial supérieur au module d'Young du matériau composant la garniture de forage.

4. Composant selon l'une quelconque des revendications 1 à 3, **caractérisé en ce que** le renfort (215) admet un coefficient de friction au niveau de la surface de butée supérieur d'au moins 20% à celui du matériau composant la garniture de forage.

5. Composant selon l'une quelconque des revendications précédentes, **caractérisé en ce que** la portion terminale (210 ; 110) comprend un appendice (213) s'étendant après la surface d'étanchéité (212 ; 102) jusqu'à la première surface de butée (211 ; 111).

6. Composant selon l'une quelconque des revendications précédentes, **caractérisé en ce que** la première extrémité (200 ; 100) comprend une seconde surface de butée (201, 211; 101, 111) apte à coopérer en serrage avec une surface de butée (111, 101 ; 211, 201) correspondante de la seconde extrémité (100 ; 200) de l'autre composant.

7. Utilisation d'un composant selon l'une quelconque des revendications précédentes comme composant de garniture de forage.

8. Utilisation d'un composant selon l'une quelconque des revendications 1 à 6 comme composant de colonne sous-marine de maintenance dite work-over riser.

9. Utilisation selon la revendication 7 **caractérisée en ce que** le **caractérisé en ce que** le composant est une tige de forage, une tige lourde ou une masse-tige.

**Patentansprüche**

1. Bauteil, das für das Bohren und die Ausbeutung von Kohlenwasserstoffquellen verwendet wird, mit einer im Wesentlichen röhrenförmigen Form, das mit einem ersten Ende (200; 100) versehen ist, das mit einem zweiten Ende (100; 200) eines anderen Bauteils verbunden werden kann, das auch für das Bohren und die Ausbeutung von Kohlenwasserstoffquellen verwendet wird, wobei das erste Ende (200; 100) einen Endabschnitt (210; 110) umfasst, der mit einer ersten Anschlagfläche (211, 201; 111, 101) versehen ist, die durch Quetschung mit einer entsprechenden Anschlagfläche (101, 111; 201, 211) des zweiten Endes (100; 200) zusammenwirken kann, und mit einer Dichtungsfläche (212; 102) versehen ist, die durch Quetschung mit einer entsprechenden Dichtungsfläche (102; 212) des zweiten Endes (100; 200) zusammenwirken kann, wobei dem Endabschnitt (210; 110) eine Gewindezone (220; 120) vorangeht, die mit einer entsprechenden Gewindezone (120; 220) des zweiten Endes (100; 200) verschraubt werden kann, wobei ein kompressibles Volumen (214a) in der Dicke des ersten Endabschnitts (210; 110) und teilweise unter der Dichtungsfläche (212; 102) ausgebildet ist, **dadurch gekennzeichnet, dass** das kompressible Volumen (214a) so ausgebildet ist, dass die radiale Steifigkeit des Endabschnitts um mindestens 20 % verringert ist, während mindestens 60 % seiner axialen Steifigkeit bewahrt sind, und dass das kompressible Volumen (214a) aus einer ringförmigen Aussparung gebildet ist, die im Inneren des Endabschnitts (210; 110) und auf der Höhe der ersten Anschlagfläche (211; 111) mündet und teilweise mit einer Verstärkung (215) gefüllt ist.

2. Bauteil nach Anspruch 1, **dadurch gekennzeichnet, dass** die Länge (L) der ringförmigen Aussparung so gewählt ist, dass sie sich unter mindestens 75 % der Dichtungsfläche (212; 102) erstreckt.

3. Bauteil nach Anspruch 1 oder 2, **dadurch gekennzeichnet, dass** die Verstärkung (215) einen axialen Elastizitätsmodul annimmt, der größer ist als der Elastizitätsmodul des Materials, das den Bohrstrang bildet.

4. Bauteil nach einem der Ansprüche 1 bis 3, **dadurch gekennzeichnet, dass** die Verstärkung (215) einen Reibungskoeffizienten auf der Höhe der Anschlagfläche annimmt, der um mindestens 20 % größer ist als jener des Materials, das den Bohrstrang bildet.

5. Bauteil nach einem der vorangehenden Ansprüche, **dadurch gekennzeichnet, dass** der Endabschnitt (210; 110) einen Anhang (213) umfasst, der sich nach der Dichtungsfläche (212; 102) bis zur ersten Anschlagfläche (211; 111) erstreckt.

**6.** Bauteil nach einem der vorangehenden Ansprüche, **dadurch gekennzeichnet, dass** das erste Ende (200; 100) eine zweite Anschlagfläche (201, 211; 101, 111) umfasst, die durch Quetschung mit einer entsprechenden Anschlagfläche (111, 101; 211, 201) des zweiten Endes (100; 200) des anderen Bauteils zusammenwirken kann.

**7.** Verwendung eines Bauteils nach einem der vorangehenden Ansprüche als Bauteil eines Bohrstrangs.

**8.** Verwendung eines Bauteils nach einem der Ansprüche 1 bis 6 als Bauteil einer Unterwasserleitung zur Wartung, das Work-Over Riser genannt wird.

**9.** Verwendung nach Anspruch 7, **dadurch gekennzeichnet, dass** das Bauteil eine Bohrstange, eine schwergewichtige Bohrstange oder eine Schwerstange ist.

**Claims**

**1.** A component used for drilling and operating hydrocarbon wells which is substantially tubular in form, provided with a first end (200; 100) which is suitable to be connected to a second end (100; 200) of another component also used for drilling and operating hydrocarbon wells, the first end (200; 100) comprising a terminal portion (210; 110) provided with a first abutment surface (211, 201; 111, 101) which is suitable to cooperate by interference with a corresponding abutment surface (101, 111; 201, 211) on the second end (100; 200) and being provided with a sealing surface (212; 102) which is suitable to cooperate by interference with a corresponding sealing surface (102; 212) on the second end (100; 200), said terminal portion (210; 110) being preceded by a threaded zone (220; 120) which is suitable to be made up into a corresponding threaded zone (120; 220) of the second end (100; 200), a compressible volume (214a), being provided in the thickness of the first terminal portion (210; 110) and partially beneath the sealing surface (212; 102), **characterized in that** the compressible volume (214a) is provided so as to reduce the radial stiffness of said terminal portion by at least 20%, while conserving at least 60 % of its axial stiffness, and **in that** the compressible volume (214a) is constituted by an annular recess opening into the interior of the terminal portion (210 ; 110) and at the level of the first abutment surface (211 ; 111) and partially filled in by a reinforcing means (215).

**2.** A component according to claim 1, **characterized in that** the length (L) of the annular recess is selected such that it extends beneath at least 75% of the sealing surface (212; 102).

**3.** A component according to claim 1 or claim 2, **characterized in that** the reinforcing means (215) has an axial Young's modulus which is higher than the Young's modulus of the material constituting the drill string.

**4.** A component according to any one of claims 1 to 3, **characterized in that** the reinforcing means (215) has a coefficient of friction at the abutment surface which is greater by at least 20% than that of the material comprising the drill string.

**5.** A component according to any one of the preceding claims, **characterized in that** the terminal portion (210; 110) comprises an appendix (213) extending beyond the sealing surface (212; 102) to the abutment surface (211; 111).

**6.** A component according to any one of the preceding claims, **characterized in that** the first end (200; 100) comprises a second abutment surface (201, 211; 101, 111) which is suitable to cooperate by interference with a corresponding abutment surface (111, 101; 211, 201) on the second end (100; 200) of the other component.

**7.** Use of a component according to any one of the preceding claims as a component used in drill string.

**8.** Use of a component according to any one of the claims 1 to 6 as a component used in a riser pipe for maintenance work such as a work-over riser.

**9.** Use according to claim 7, **characterized in that** the component is a drill pipe, a heavy weight drill pipe or a drill collar.

**Fig. 1A**

**Fig. 1B**

**Fig. 2A**

**Fig. 2B**

**Fig. 3A**

**Fig. 3B**

**Fig. 4A**

**Fig. 4B**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 59083887 A
- WO 03048623 A
- WO 04109173 A